# FASCICULE DE BREVET EUROPEEN

(11) **EP 0 290 306 B1**
(45) Date de publication et mention de la délivrance du brevet: **27.01.1993**
(21) Numéro de dépôt: 88400908.5
(22) Date de dépôt: 14.04.1988
(51) Int. Cl.: C08H 1/00, C09D 4/06

(54) **Matières plastiques dérivées de la caséine et leur préparation**
Kunststoffmaterialien auf der Basis von Kasein und ihre Herstellung
Plastic materials derived from casein, and their preparation

(30) Priorité: 05.05.1987 FR 8706318
(43) Date de publication de la demande: 09.11.1988
(73) Titulaire: SOCIETE POUR LA RECHERCHE ET L'INNOVATION, 75007 Paris (FR)
(72) Inventeur: Mastagli, Pierre Joseph, F-75007 Paris (FR)
(74) Mandataire: Polus, Camille

(56) Documents cités:
- DE-C- 681 125
- FR-A- 2 549 069
- CHEMICAL ABSTRACTS, vol. 96, 1982, page 127, résumé no. 16261d, Columbus, Ohio, US; J. KOROLCZUK: "Effect of halogen type and temperature on the velocity of casein carboxymethylation", & Milchwissenschaft 1981, 36(10) 601-2

## Description

La présente invention a pour objet des matières plastiques dérivées de la caséine ainsi que leur procédé de préparation.

La caséine est une protéine constituée par un mélange de phosphoroprotéides. A part son utilisation traditionnelle dans les industries laitière et pharmaceutique, elle est employée dans la fabrication de produits rigides, tels que des boutons de luxe. A cet effet, la caséine est coagulée par la présure ("caséine présure"), réduite en poudre, additionnée d'eau et de charge(s), puis agglomérée sous pression à chaud. Finalement le produit obtenu sous forme de plaques ou de baguettes est traité par le formaldéhyde. Toutefois ces produits restent relativement chers, malgré les surplus de production de lait, car le rendement en caséine est seulement de 3% à partir du lait.

On a maintenant trouvé que la caséine pouvait être transformée en une matière plastique utilisable dans un domaine plus large que la caséine elle-même, et cela avec un gain de poids ayant pour conséquence une diminution du prix de revient des produits obtenus.

L'invention a pour objet un procédé de préparation de matières plastiques dérivées de la caséine, caractérisé en ce que l'on hydrolyse partiellement la caséine au moyen d'acide chlorhydrique aqueux à 10-15% à une température allant de 40 à 60°C, pour obtenir un mélange d'oligomères, puis on fait réagir ces oligomères sur un acide carboxylique alcanoïque monohalogéné ayant de 2 à 7 atomes de carbone à une température allant de 80 à 100°C.

La première étape de ce procédé consiste à couper la caséine, formée essentiellement d'un enchaînement polypeptidique (notamment à base d'acide glutamique, leucine, proline, lysine, valine, tyrosine, méthionine, phénylalamine, arginine et histidine), en oligomères. Cette hydrolyse partielle peut être effectuée au moyen d'acide chlorhydrique à 10-15% (l'acide chlorhydrique commercial d = 1,19 dilué environ trois fois), à une température allant de 40 à 60°C. On obtient ainsi une poudre blanche d'oligomères que l'on peut sécher. En faisant varier la proportion d'acide chlorhydrique, on obtiendra des oligomères plus ou moins longs.

La seconde étape du procédé consiste à faire réagir ces oligomères avec un acide alcanoïque monohalogéné, ayant de 2 à 7 atomes de carbone, par exemple, un acide alcanoïque monochloré, comme l'acide monochloracétique. Dans cet exemple, le groupe carboxyméthyle de cet acide se greffe sur les atomes d'azote libres des groupes peptidiques pour former un motif du type 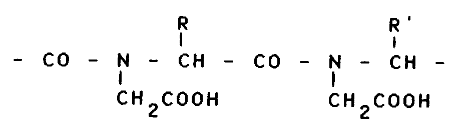
R et R' étant les restes des acides aminés mentionnés précédemment, puis cette molécule va pouvoir se ponter sur elle-même (ou sur une autre molécule) par élimination (sous forme d'eau) du radical hydroxy de la fonction carboxylique et d'un atome d'hydrogène d'une fonction amide libre. Cette réaction peut être effectuée à une température allant de 80 à 100°C. On utilisera de préférence environ une partie en poids d'oligomère pour environ une à environ deux parties en poids d'acide monochloracétique.

Les propriétés physiques de la matière plastique obtenue selon l'invention peuvent être variables selon la quantité et le type de réactif halogéné utilisé qui peut réagir d'une façon différente sur les sites actifs de la caséine et selon la température de réaction. Cette matière plastique est totalement insoluble dans l'eau et les solvants organiques usuels. Contrairement à la caséine, elle n'est pas hydrophile. La matière plastique peut être visqueuse et alors on peut la filer aisément. On peut aussi la durcir, notamment sous forme de fils, à l'aide des réactifs habituels tels que le formaldéhyde, le sulfure de carbone, de furfural, etc. On peut également l'obtenir sous forme dure, immédiatement utilisable.

La matière plastique selon l'invention a une couleur blanc-ivoire et peut être utilisée telle quelle, ou avec l'inclusion de charges, dans divers domaines, par exemple dans les revêtements de mobilier, la décoration, etc. De plus, son prix de revient est nettement inférieur à celui de la caséine traitée de l'état de la technique, puisqu'on peut augmenter le poids de celle-ci jusqu'à 100%.

Les exemples suivants illustrent l'invention.

### Exemple 1

### a) préparation du mélange d'oligomères.

On traite 20 g de caséine par 5 g d'acide chlorhydrique commercial (d = 1,19) dilué dans 10 g d'eau à une température ne dépassant pas 60°C durant 12 heures. On obtient une poudre blanche que l'on sèche.

### b) préparation de la matière plastique.

On fait réagir 10 g d'oligomère préparé selon a) avec 5 g d'acide monochloracétique. On obtient après chauffage à 100°C, pendant 12 heures un produit cristallin insoluble dans l'eau et se décomposant vers 260°C. L'analyse élémentaire montre qu'il contient 12% d'azote. Il est sensible à l'humidité. On peut le plastifier par du citrate triéthylique et obtenir des fils résistants et élastiques.

### Exemple 2

On fait réagir 20 g d'oligomère obtenu selon l'exemple 1a) avec 20 g d'acide monochloracétique. On obtient après 10 heures de chauffage à 100°C un produit cristallin fondant à 160°C et contenant 10% d'azote.

### Exemple 3

On fait réagir 20 g d'oligomère obtenu selon l'exemple 1a) sur 25 g d'acide monochloracétique durant 10 heures à 80°C. On obtient alors une pâte épaisse visqueuse qui se liquéfie à 100°C et qui contient 10% d'azote. On peut la durcir au moyen d une solution aqueuse de formaldéhyde.

Les produits obtenus dans les exemples 1,2,3 sont insolubles dans les solvants organiques utilisés en I.R., U.V. et R.M.N.. On a pu, au contraire, les soumettre à la diffraction RX. Comme prévu, les clichés obtenus par cette méthode montrent que la structure cristalline de l'acide monochloracétique n'existe plus une fois la réaction effectuée. Il a donc réagi d'une façon complète pour aboutir au polymère attendu.

## Revendications

1. Procédé de préparation de matières plastiques dérivées de la caséine, caractérisé en ce que l'on hydrolyse la caséine au moyen d'acide chlorhydrique à 10-15% à une température allant de 40 à 60°C pour obtenir un mélange d'oligomères, puis on fait réagir ces oligomères sur un acide alcanoïque monohalogéné ayant de 2 à 7 atomes de carbone à une température allant de 80 à 100°C.

2. Procédé selon la revendication 1, caractérisé en ce que l'acide alcanoïque monohalogéné est un acide monochloré.

3. Procédé selon la revendication 2, caractérisé en ce que l'acide alcanoïque monohalogéné est l'acide monochloracétique.

4. Procédé selon la revendication 3, caractérisé en ce que l'on utilise une partie en poids d'oligomères pour environ une à environ deux parties en poids d'acide monochloracétique.

5. Matière plastique susceptible d'être obtenue par le procédé selon l'une quelconque des revendications 1 à 4 ou selon des moyens chimiques équivalents.

## Claims

1. A process for the preparation of plastics materials derived from casein, characterized in that the casein is hydrolyzed at a temperature between 40 and 60°C - by means of hydrochloric acid at 10-15% - to obtain a mixture of oligomers, then these oligomers are made to react with a monohalogenated alkanoic acid having from 2 to 7 atoms of carbon at a temperature between 80 and 100°C.

2. A process in accordance with Claim 1, characterized in that the monohalogenated alkanoic acid is a monochlorinated acid.

3. A process in accordance with Claim 2, characterized in that the monohalogenated alkanoic acid is monochloracetic acid.

4. A process in accordance with Claim 3, characterized in that one part by weight of oligomers is used for approximately one to approximately two parts by weight of monochloracetic acid.

5. A plastics material obtainable by the process in accordance with any one of Claims 1 to 4 or in accordance with equivalent chemical means.

## Patentansprüche

1. Verfahren zur Herstellung von Kunststoffen auf der Basis von Kasein, dadurch gekennzeichnet, daß Kasein mit Hilfe von 10 bis 15 prozentiger Salzsäure bei einer Temperatur von 40 bis 60° C hydrolysiert wird, um ein Gemisch von Oligomeren zu erhalten, und daß man diese Oligomere mit einer monohalogenierten Alkankarbonsäure mit 2 bis 7 Kohlenstoffatomen bei einer Temperatur von 80 bis 100°C reagieren läßt.

2. Verfahren nach Anspruch 1, dadurch gekennzeichnet, daß die monohalogenierte Alkankarbonsäure eine Monochlorsäure ist.

3. Verfahren nach Anspruch 2, dadurch gekennzeichnet, daß die monohalogenierte Alkankarbonsäure Monochloressigsäure ist.

4. Verfahren nach Anspruch 3, dadurch gekennzeichnet, daß ein Gewichtsteil Oligomere auf etwa ein bis etwa zwei Gewichtsteile Monochloressigsäure verwendet wird.

5. Kunststoff, der mit dem Verfahren nach einem der Ansprüche 1 bis 4 oder mit gleichwertigen chemischen Mitteln hergestellt werden kann.
